# EUROPEAN PATENT SPECIFICATION

(11) **EP 3 812 081 B1**
(45) Date of publication and mention of the grant of the patent: **02.10.2024**
(21) Application number: 20202907.0
(22) Date of filing: 20.10.2020
(51) Int. Cl.: B23K 26/70, B23K 31/12, B23K 26/14, B23K 26/21

(54) **PROTECTING MODULE FOR LASER WELDING DEVICE**
SCHUTZMODUL FÜR LASERSCHWEISSVORRICHTUNG
MODULE DE PROTECTION POUR DISPOSITIF DE SOUDAGE PAR LASER

(30) Priority: 21.10.2019 KR 20190130505
(43) Date of publication of application: 28.04.2021
(73) Proprietor: Samsung SDI Co., Ltd., Yongin-si, Gyeonggi-do 17084 (KR)
(72) Inventor: RYU, Sang Hyun, 17084 Yongin-si (KR); JUNG, Hee Dong, 17084 Yongin-si (KR); AN, Seong Bae, 17084 Yongin-si (KR); HEO, Jin Gyu, 17084 Yongin-si (KR); ROH, Jae Hoon, 17084 Yongin-si (KR)
(74) Representative: Marks & Clerk LLP

(56) References cited:
- CN-A- 109 759 697
- KR-A- 20030 050 457
- KR-A- 20140 064 443
- US-A1- 2019 160 592

## Description

### BACKGROUND

### 1. Field

The present invention relates to a protecting module for a laser welding device as disclosed in the preamble of claim 1 (see, for example, CN 109 759 697 A).

### 2. Description of the Related Art

In general, as portable wireless devices such as video cameras, mobile phones, and portable computers become light-weight and equipped with high level functions, a lot of researches have been made on secondary batteries used as a driving power source. Such secondary batteries include, for example, a nickel-cadmium battery, a nickel-hydrogen battery, a nickel-zinc battery, a lithium battery, and the like. Among these batteries, the lithium secondary battery is rechargeable, can be small in size but with high capacity, and has high operating voltage and high energy density per unit weight, and thus, the lithium secondary battery has been widely used in high-tech electronic devices.

Since various parts in the lithium secondary battery need to be welded during a manufacturing process, an ultrasonic welding device, a laser welding device, or the like is used to perform a welding process. Among the welding devices, one example of the laser welding device is disclosed in Korean Patent Publication No. 2018-0096910 (publication date: August 30, 2018).

The above information disclosed in this Background section is only for enhancement of understanding of the background of the described technology, and therefore it may contain information that does not form the related art.

US 2019/160592, KR 2014/0064443, KR 2003/0050457 and CN109759697 all provide disclosures related to laser welding.

### SUMMARY

An aspect of the present invention provides a protecting module for coupling to a laser welding device according to claim 1. Details of embodiments are provided in the dependent claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIG. 1 illustrates a perspective view of a protecting module for a laser welding device according to an embodiment of the present disclosure;
FIG. 2 illustrates a front view of a protecting module for a laser welding device according to an embodiment of the present disclosure;
FIG. 3 illustrates a perspective view showing, in one direction, main parts of a protecting module for a laser welding device according to an embodiment of the present disclosure;
FIG. 4 illustrates a perspective view showing, in another direction, the main parts of the protecting module for a laser welding device according to the embodiment of the present disclosure;
FIG. 5 illustrates a perspective view showing an air flow path of the protecting module for a laser welding device according to an embodiment of the present disclosure; and
FIG. 6 illustrates a perspective view showing a form of air spraying in the protecting module for a laser welding device according to the present disclosure.

### DETAILED DESCRIPTION

The embodiments of the present disclosure are provided to describe the present disclosure to those of ordinary skill in the art. The following embodiments may be modified to various types, and the scope of the present disclosure is not limited to the following embodiments. In the drawings, the thickness and size of each layer are exaggerated for convenience of explanation and clarity, and like reference numerals refer to like elements throughout. As used in this specification, the term "and/or" includes any and all combinations of one or more of the associated listed items. Also, in this specification, it will be understood that when an element A is referred to as being "connected to" an element B, the element A can be directly connected to the element B, or an intervening element C may be present between the elements A and B so that the element A can be indirectly connected to the element B.

The terminology used herein is for the purpose of describing particular embodiments only and is not intended to be limiting of the disclosure. As used herein, the singular forms are intended to include the plural forms as well, unless the context clearly indicates otherwise. Also, it will be further understood that the terms "comprise or include" and/or "comprising or including," when used in this specification, specify the presence of stated features, numbers, steps, operations, members, elements, and/or groups thereof, but do not preclude the presence or addition of one or more other features, numbers, steps, operations, members, elements, and/or groups thereof.

It will be understood that, although the terms first, second, etc. may be used herein to describe various members, components, regions, layers and/or sections, these members, components, regions, layers and/or sections should not be limited by these terms. These terms are only used to distinguish one member, component, region, layer and/or section from another. Thus, a first member, a first component, a first region, a first layer and/or a first section discussed below could be termed a second member, a second component, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "beneath" or "below" other elements or features would then be oriented "above" or "upper" the other elements or features. Thus, the term "beneath" can encompass both an orientation of "above" and "below".

Hereinafter, embodiments will be described in detail with reference to the accompanying drawings. For convenience, hereinafter, the description will be made assuming that the side near a protecting module of a laser welding device is defined as front, and the side near a main housing is defined as rear.

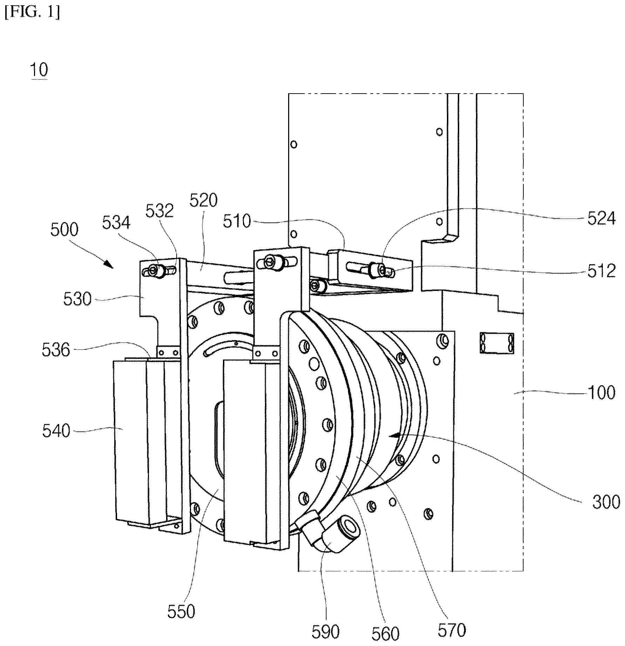

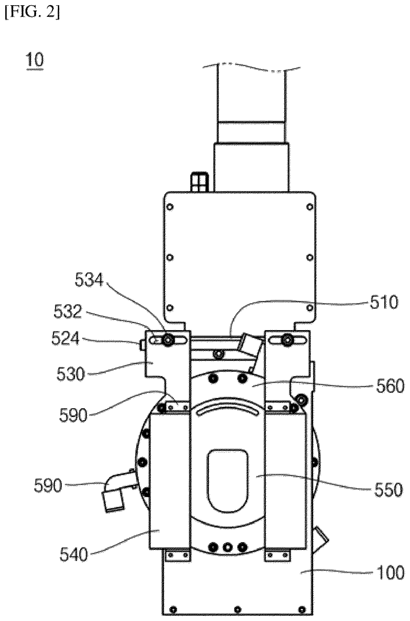

FIG. 1 illustrates a perspective view of a protecting module for a laser welding device according to an embodiment of the present disclosure. FIG. 2 illustrates a front view of a protecting module for a laser welding device according to an embodiment of the present disclosure.

As illustrated in FIGS. 1 and 2, a laser welding device 10 may include a main housing 100 to which various components for generating and emitting a laser beam are mounted, an optical system housing 300 which is coupled to one side of the main housing 100 to accommodate an optical system such as lenses, and a protecting module 500 which is disposed in front of the main housing 100 to protect the optical system.

The main housing 100 has, in an embodiment, an approximate box shape, and the optical system housing 300 and the protecting module 500 are coupled to a front surface of the main housing 100.

In an embodiment, an optical system component such as a lens for emitting laser is disposed inside the optical system housing 300, and protective glass 310 is coupled to a front surface of the optical system housing 300.

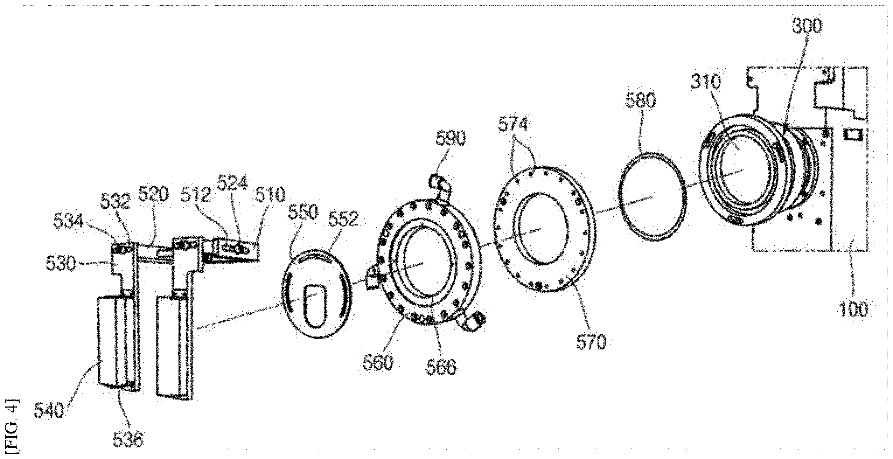

The protective glass 310 may be a kind of a shielding wall for protecting the optical system component. The protective glass 310 allows the laser beam emitted from an optical system to pass therethrough but prevents foreign substances such as spatter or fume generated during laser welding from entering the optical system (see FIG. 4).

Thus, since the foreign substances are attached to the protective glass 310, periodic cleaning is necessary. However, if the protective glass 310 is cleaned frequently, micro damage may occur in the protective glass 310.

Also, when there are scratches on the protective glass 310 due to the foreign substances and increases in damage, the replacement cycle of the protective glass 310 becomes shorter, and the protective glass 310 may be broken if not replaced. Thus, since the protective glass 310 needs to be replaced periodically, the maintenance costs may increase. To prevent the damage to the protective glass 310 due to the cleaning and an increase in costs due to the shortened replacement cycle, the protecting module 500 may be mounted.

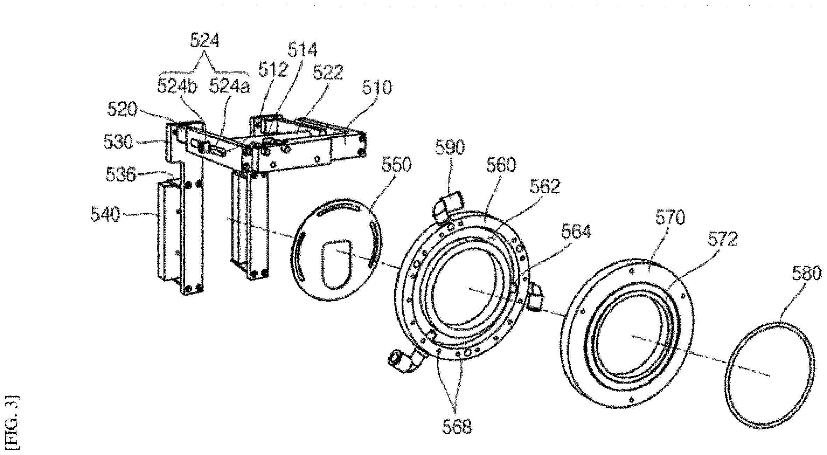

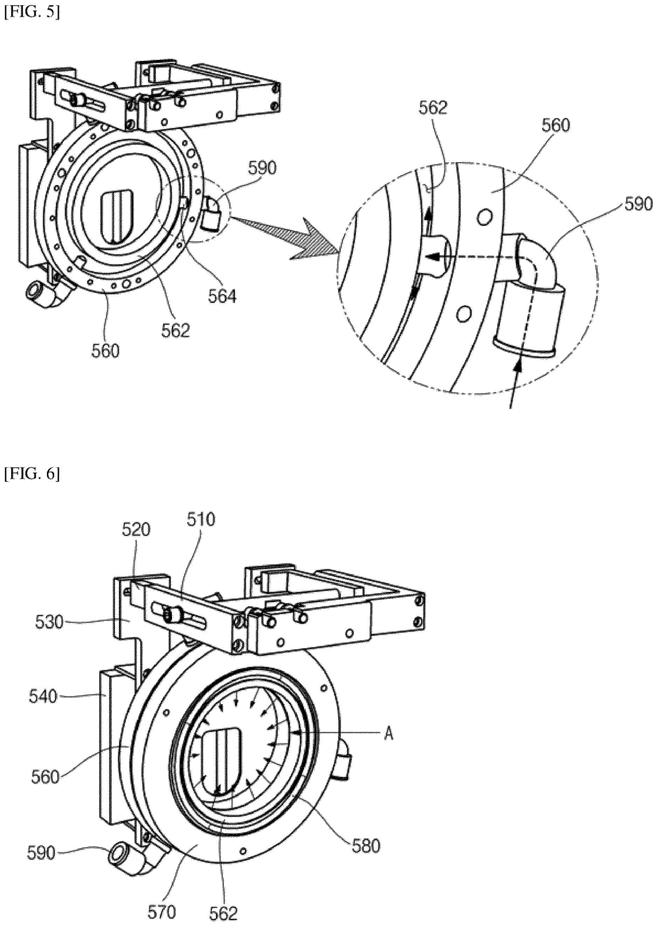

FIG. 3 illustrates a perspective view showing, in one direction, main parts of a protecting module for a laser welding device according to embodiments of the present disclosure. FIG. 4 illustrates a perspective view showing, in another direction, the main parts of the protecting module for a laser welding device according to the embodiment of the present disclosure. FIG. 5 illustrates a perspective view showing an air flow path of the protecting module for a laser welding device according to an embodiment of the present disclosure.

FIG. 3 is an exploded view showing a protecting module with features according to embodiments of the present invention. The protecting module 500 comprises a first cover (560) and a second cover (570), wherein one of the first cover or the second cover comprises a plurality of air supply units (590), though which air can flow, installed on the outer circumferential surface of one of the first cover or the second cover. Each of the first cover and the second cover comprises an aperture through which a laser beam can pass. When the protecting module is coupled to a laser welding device, and when the latter is in operation, the laser beam passes through protective glass (310) of the welding device (10). Typically such a welding device comprises a main housing (100), an optical system housing (300) and protective glass (310). When the protecting module is coupled to a laser welding device, the second cover is coupled to the optical system housing (300) that supports the protective glass. The first cover or the second cover comprises an air flow path (562). The air flow path (562) is a channel which is recessed from a plate surface on one side of the cover. A plurality of air holes (564) which pass through the cover allow the air flow path (562) and the outer circumferential surface to be in fluid communication with each other, and the air supply units (590) are in fluid communication with the air holes. In an embodiment, the air flow path is located on a side of the first cover which faces the second cover. In another embodiment, the air flow path is located on a side of the second cover which faces the first cover.

In another embodiment, the second cover may further comprise a sealing member (580), which, when the protective module is coupled with the welding device, is inserted between the second cover and the optical system housing. In another embodiment, the second cover further comprises a sealing section (572) which is recessed in a plate surface of the second cover and may receive the sealing member (580). In another embodiment, the first cover may further comprise a plurality of fastening holes (568). In the present invention, the protecting module comprises a reflect light-absorbing plate (550). In another embodiment, the protecting device may further comprise a fixing frame (510) for coupling to the main housing. The details of the fixing frame and features associated with it in other embodiments are described below.

The exploded view in Figure 3 further illustrates additional features which may be provided in other embodiments, including a fixing frame 510 coupled to the main housing 100, a sliding frame 520 movably coupled to the fixing frame 510, and a support frame 530 movably coupled to the sliding frame 520. In an embodiment, a lamp 540 may be coupled to the support frame 530. According to the present invention, the protecting module 500 includes a reflected light-absorbing plate 550 disposed in front of the optical system housing 300 and, in an embodiment, a cover assembly disposed between the reflected light-absorbing plate 550 and the optical system housing 300. The cover assembly represents a part in which a first cover 560 and a second cover 570 are coupled to each other. The first cover 560 is connected to a plurality of air supply units 590, and a sealing member 580 is inserted between the second cover 570 and the optical system housing 300.

As illustrated in FIGS. 1 to 4, the fixing frame 510, as included in some embodiments, has an approximately 'U'-shape in which both ends thereof are bent forward to face each other. A movement slit 512 is provided in each of the facing ends of the fixing frame 510, and a central section of the fixing frame 510 is coupled to the main housing 100 by a plurality of fastening members 514. The fastening members 514 may be provided as a coupling pin, a bolt, or the like.

The movement slit 512 passes through each of the bent ends of the fixing frame 510 and has a certain length in a longitudinal direction. As the sliding frame 520 slides along the movement slit 512, the support frame 530 is close to or away from the first cover 560. Accordingly, an installation position of the lamp 540 installed in the support frame 530 may be adjusted.

As illustrate in FIGS. 1 to 4, the sliding frame 520 is provided in a pair and movably coupled to the respective one of the movement slits 512. The sliding frames 520 have a straight bar shape and are disposed along the longitudinal direction of the movement slits 512.

In an embodiment, a cylindrical connection pin 522 is coupled to between the pair of the sliding frames 520 (inner surfaces thereof), and thus, the sliding frames 520 are connected to each other to move as a single body. A sliding pin 524 is coupled to each of end portions of the sliding frames 520 spaced apart from a region into which the connection pin 522 is inserted.

Each of the sliding pins 524 is disposed protruding from an outer surface of the sliding frame 520 toward the movement slit 512. The sliding pin 524 includes a pin body 524a coupled to the sliding frame 520 and a pin head 524b protruding outward from the movement slit 512. The pin body 524a and the pin head 524b are integrated with each other, and a diameter of the pin head 524b is greater than a diameter of the pin body 524a and a width of the movement slit 512.

The sliding pin 524 is inserted into the movement slit 512 and is fixed to the sliding frame 520 in a state in which the sliding frame 520 is disposed along the movement slit 512, and thus, the sliding frames 520 may be movably coupled to the movement slits 512 of the fixing frame 510. The support frame 530 is coupled to the sliding frame 520.

As illustrated in FIGS. 1 to 4, in an embodiment, the support frame 530 is disposed to be perpendicular to a front end portion of the sliding frame 520. Also, the support frame 530 is disposed in parallel to the first cover 560. Since the sliding frame 520 is provided in a pair, the support frame 530 is also provided in a pair and coupled to the respective one of the end portions of the sliding frames 520.

In an embodiment, the support frame 530 has a bar shape having a certain width, and adjustment slit 532 passes through one end thereof in a width direction. An adjustment pin 534 is inserted into the adjustment slit 532, and thus, the support frame 530 is movably coupled to the sliding frame 520. The adjustment pin 534 has the same type as the sliding pin 524, and when the support frame 530 is moved in the width direction in a state in which the adjustment slit 532 is constrained by the adjustment pin 534, a position of the support frame 530 is adjusted. As the position of the support frame 530 changes, a position of the lamp 540 mounted to the support frame 530 also changes.

In an embodiment, a support bracket 536 for mounting the lamp 540 is coupled to a front surface of the support frame 530.

One end of the support bracket 536 is fixed on the support frame 530, and the other end thereof is bent at right angle and extends. The support bracket 536 is provided in a pair, and the pair of support brackets 536 are fixed on the support frame 530 in a state of being spaced apart from each other by a distance corresponding to a length of the lamp 540. The support brackets 536 are installed such that the portions extending at right angle face each other in parallel, and the lamp 540 is inserted between the extended portions and coupled to the support brackets 536.

As illustrated in FIGS. 1 and 2, in an embodiment, the lamp 540 has a cuboidal shape and coupled between the pair of support brackets 536. The lamp 540 may be embodied as LED, etc., and a substrate (not shown) for operation, a power connector (not shown) for connection with an external power supply, or the like may be built therein. The lamp 540 is provided to monitor the particular wavelength band and is used to check welding quality. That is, the lamp 540 for emitting light corresponding to a wavelength band of the laser beam is utilized, and thus, the laser welding quality may be checked.

Also, in an embodiment, the reflected light-absorbing plate 550 is disposed behind the lamp 540.

As illustrated in FIGS. 3 and 4 and according to the present invention, the reflected light-absorbing plate 550 has a disc shape and is configured to absorb a reflected beam generated during laser welding to prevent peripheral components from be damaged by the reflected light. The reflected light-absorbing plate 550 may be made of a material such as steel, and the surface thereof may be treated to have dark color through an anodizing method or the like. According to the present invention, the reflected light-absorbing plate 550 is treated to have black color so that the reflected beam may be easily absorbed. Thus, the occurrence of back reflection of the laser may be reduced as much as possible.

In an embodiment, the reflected light-absorbing plate 550 includes the material such as the steel, and thus, a magnetic body may be attached to a surface thereof. Using this characteristics, a displacement sensor (not shown) provided with a magnet may be attached to the reflected light-absorbing plate 550. A focal length of laser may be easily measured by attaching the displacement sensor to the reflected light-absorbing plate 550, and thus, the precision when the optical system of the laser welding device is set may be enhanced.

Also and according to the present invention, a through-hole is provided in a plate surface of the reflected light-absorbing plate 550 so that the laser beam may pass therethrough. A plurality of plate slits 552 for discharging air sprayed from the cover assembly pass through an edge of the plate surface of the reflected light-absorbing plate 550.

In the present invention, each of the plate slits 552 has a streamline shape, which may correspond to a shape of the edge of the reflected light-absorbing plate 550, and the plurality of plate slits 552 are disposed spaced apart from each other without contacting each other. In operation, the air sprayed from the cover assembly is moved along the plate slits 552 and then discharged toward an edge of the reflected light-absorbing plate 550. Thus, there an air flow path (air current) is provided, which allows the air sprayed from the cover assembly to escape from the cover assembly to the outside of the reflected light-absorbing plate 550.

In an embodiment, the reflected light-absorbing plate 550 is tightly coupled to the first cover 560.

In an embodiment, as illustrated in FIGS. 3 and 6, the cover assembly includes the first cover 560 and the second cover 570. Although not illustrated in the drawings, the cover assembly may be coupled to the sliding frame 520 or the support frame 530. When the protecting module 500 is installed, the cover assembly is coupled to the optical system housing 300 separately, and the fixing frame 510 is coupled to the main housing 100. Alternatively, the cover assembly is first coupled to the main housing 100 in a state of being coupled to the sliding frame 520 or the support frame 530, and then, the cover assembly may be coupled to the optical system housing 300.

As illustrated in FIGS. 3 to 6 and according to the present invention, the first cover 560 has a disc shape having a certain thickness and has a ring shape in which an aperture is provided to allow the laser beam to pass therethrough. In a rear surface of the first cover 560 coupled to the second cover 570, an air flow path 562 and an air hole 564 are provided. In a front surface thereof, a plate insertion section 566 for supporting the reflected light-absorbing plate 550 is provided.

According to the present invention, the air flow path 562 has a ring shape along the ring-shaped rear surface of the first cover 560 and is recessed from the rear surface thereof. The plurality of air supply units 590 having a tube or pipe shape are connected to an outer circumferential surface of the first cover 560. Each of the air supply units 590 may communicate with the air flow path 562 through a plurality of air holes 564. The air flow path 562 provides a flow path allowing the air, which is supplied through the air supply units 590 and the air hole 564, to flow. The air flowing into the air flow path 562 is discharged between the first cover 560 and the second cover 570 and forms an "air knife" to block foreign substances. The concept of the "air knife" and its operation will be described later.

The air hole 564 is a through-hole for connecting the air flow path 562 and the outer circumferential surface and passes through a position corresponding to the air supply unit 590. The air holes 564 may be provided to correspond to the number and positions of the air supply units 590.

In an embodiment, the plate insertion section 566 is recessed from the front surface of the first cover 560 and has a shape corresponding to the size and shape of the reflected light-absorbing plate 550. Thus, in a state where the reflected light-absorbing plate 550 is inserted, the front surface of the first cover 560 is positioned on the same plane as a front surface of the reflected light-absorbing plate 550. That is, in the state where the reflected light-absorbing plate 550 is inserted into the plate insertion section 566, the front surface of the first cover 560 become flat with no height difference from the reflected light-absorbing plate 550.

The second cover 570 is coupled to the rear surface of the first cover 560 by a plurality of fastening members (not shown). To this end, a plurality of fastening holes 568 may pass through an edge of the plate surface of the first cover 560.

Similar to the first cover 560, in an embodiment, the second cover 570 includes a ring-shaped plate material having a certain thickness. A front surface of the second cover 570 may have a flat shape, and a plurality of fastening holes 574 may pass through an edge of the front surface thereof to establish the connection with the first cover 560. A sealing section 572, into which the sealing member 580 is inserted, may be provided in a rear surface of the second cover 570.

In an embodiment, the sealing section 572 has a groove shape corresponding to a shape of the sealing member 580 and may be recessed from the rear surface of the second cover 570. Alternatively, as illustrated in FIG. 3, the sealing section 572 protrudes from the rear surface of the second cover 570, and this protrusion section has a groove into which the sealing member 580 is inserted. In this case, the protrusion section is inserted into the optical system housing 300, and thus, when the cover assembly is coupled to the optical system housing 300, the second cover 570 comes into close contact with the optical system housing 300.

As illustrated in FIGS. 3 and 4, in an embodiment, the sealing member 580 has a ring shape and provides sealing between the second cover 570 and the optical system housing 300. In a state of being inserted into the sealing section 572, the sealing member 580 may protrude slightly from the sealing section 572. Accordingly, when the second cover 570 and the optical system housing 300 are coupled to each other, sealing characteristics are enhanced as the sealing member 580 is pressed.

In the protecting module for a laser welding device according to an embodiment of the present disclosure having the configuration described above, a process in which the air knife is formed will be described in detail.

FIG. 6 illustrates a perspective view showing a form of air spraying in the protecting module for a laser welding device according to an embodiment of the present disclosure. The paths through which the air flows into, moves, and is discharged are illustrated by arrows in FIG. 6.

As illustrated in FIG. 6, in a state where the first cover 560 and the second cover 570 are coupled to each other, air flows into the air flow path 562 from the outside through the air supply units 590 and the air holes 564 inside the first cover 560. Since the front surface of the second cover 570 is flat, the air introduced in the state where the second cover 570 is coupled to the first cover 560 moves within the air flow path 562.

The air flowing into the first cover 560 is discharged toward the inner circumferential surface of the cover assembly through a space A between mating surfaces of the first cover 560 and the second cover 570. To this end, the space A between the mating surfaces on the inner circumferential surface sides of the first cover 560 and the second cover 570 is not completely closed but has a gap sufficient to allow the air to be discharged.

The external air flowing into the first cover 560 is discharged toward the gap (to the apertures) of the space A between the mating surfaces of the first cover 560 and the second cover 570. The air to be discharged is circularly discharged along the shape of the inner circumferential surface of the cover assembly. This air being discharged serves as a curtain for blocking the inner circumferential surface side of the cover assembly, and thus, when the air being discharged has an effect similar to that of forming an air membrane, the air is defined as an air curtain or an air knife.

The air forming the air knife moves toward the front surface of the first cover 560 because the second cover 570 is closed, and is then guided to the outside of the reflected light-absorbing plate 550 through the aperture and the plate slit 552 of the reflected light-absorbing plate 550 and discharged to the outside of the cover assembly.

Although the laser beam is emitted to the aperture of the cover assembly, the air knife has no effect on emission of the laser beam having strong straightness. However, fine foreign substances such as spatter or fume generated during the laser welding are not allowed to flow toward the optical system housing 300 by the air knife but blocked. Thus, the air knife may prevent foreign substances from being attached on the protective glass 310 mounted to the front surface of the optical system housing 300 and protect the protective glass 310.

As described above, the laser welding device according to the present disclosure is provided with the protecting module 500 capable of forming the air knife, and thus, there is the effect of preventing the protective glass 310 from being contaminated and protecting the protective glass 310. Since the contamination of the protective glass 310 is prevented, there is the effect of making it possible to reduce loss due to the cleaning, maintain the quality of the protective glass 310, and increase the replacement cycle of the protective glass 310.

The protecting module 500 is provided with the reflected light-absorbing plate 550 made of the metal material and absorbs the reflected beam generated during the laser welding, and thus, the occurrence of back reflection of the laser beam may be reduced as much as possible. Also, since the displacement sensor for measuring the focal length of laser may be attached to the reflected light-absorbing plate 550, a separate sensor mounting mechanism is not necessary. Since the displacement sensor may be easily mounted, there is the effect of enhancing the precision when the laser welding device 10 is set.

Also, since the protecting module 500 of the present disclosure is provided with the lamp 540, the welding quality in the particular wavelength band may be monitored.

In the embodiment of the present disclosure, the air is sprayed from the inside of the first cover and the second cover and allowed to flow toward the slits of the reflected light-absorbing plate disposed in front of the protective glass. Therefore, the protective glass is prevented from being contaminated.

Also, the absorbing plate for absorbing the reflected laser beam is installed in the front of the protecting module, and thus, the light reflected during the welding is absorbed. Therefore, the damage of the components due to the reflected light is prevented. In addition, the absorbing plate is used as an attachment pad to which the displacement sensor for measuring the focal length of laser is attached. Therefore, the increase in the number of components is suppressed, and the structure is simplified.

That is, the embodiment of the present disclosure provides the protecting module for the laser welding device, which may use the simple structure to protect the optical system and be used for various purposes.

The above is merely an embodiment of the present disclosure, and thus, the present disclosure is not limited to the foregoing embodiment. Accordingly, it will be understood by those of ordinary skill in the art that various changes in form and details may be made without departing from the scope of the claims.

## Claims

1. A protecting module (500) for coupling, in use, to a laser welding device (10), the laser welding device comprising a main housing (100), a protective glass (310) and an optical system housing (300) for supporting the protective glass, wherein, in operation the laser welding device provides a laser beam which passes through the protective glass, the protecting module comprising:
a first cover (560) having an aperture for allowing, in use, a laser beam to pass therethrough;
a second cover (570) which is, in use, provided on one side of a main housing of the laser welding device in a coupled state with the first cover, is couplable to the optical system housing and when so-coupled is located on one side of a main housing , and has an aperture that allows, in use, the laser beam to pass therethrough; and
a plurality of air supply units (590) which are installed on an outer circumferential surface of the first cover or the second cover and through which outside air flows into,
wherein the first cover (560) or the second cover (570) comprises an air flow path, said air flow path being a channel which is recessed from a plate surface on one side of the first cover or the second cover and a plurality of air holes (564) which pass therethrough to allow the air flow path and the outer circumferential surface of the first cover or the second cover to be in fluid communication with each other, and the air supply units are in fluid communication with the air holes,
wherein the air supply units are configured to supply air to the air flow path, such that it is, in use, discharged to a space A space between mating surfaces of the first cover and the second cover and toward the apertures,
wherein the first cover and the second cover have a disc shape, and the air flow path has a ring shape and is provided in the plate surface of the first cover or the second cover, and
**characterised in that**
the protecting module further comprises a reflected light-absorbing plate (550) which is coupled to a plate surface of the first cover on the opposite side from the second cover, has a hole which allows the laser beam, in use, beam to pass therethrough, and has black color, wherein the reflected light-absorbing plate has a disc shape and has a plurality of streamline-shaped plate slits (552) which pass therethrough and are spaced apart from each other along an outer edge.

2. The protecting module of claim 1, wherein the reflected light-absorbing plate comprises a metal material to which a magnetic body is attached by a magnetic force.

3. The protecting module of claim 1 or claim 2, further comprising a sealing member (580) which has a ring shape and is insertable between the optical system housing and the second cover to provide sealing between the optical system housing and the second cover.

4. The protecting module of claim 3, further comprising a sealing section (572), into which the sealing member is inserted, is recessed from a plate surface on one side of the second cover.

5. The protecting module of any preceding claim, further comprising:
a fixing frame (510) which is couplable to one side of a main frame of the laser welding device, is disposed adjacent to the optical system housing, and has both ends bent to form a 'U'-shape;
sliding frames (520), each of which has a straight shape and is slidably coupled to a respective one of both the bent ends of the fixing frame; and
support frames (530), each of which is coupled to a respective one of the sliding frames and disposed in parallel to the first cover.

6. The protecting module of claim 5, further comprising lamps (540), each of which is couplable to a respective one of the support frames and is configured to emit light corresponding to a wavelength of the laser beam.

7. A laser welding arrangement comprising a laser welding device and a protecting module according to any preceding claim.

## Patentansprüche

1. Schutzmodul (500) zum Koppeln, bei Verwendung, an eine Laserschweißvorrichtung (10), wobei die Laserschweißvorrichtung ein Hauptgehäuse (100), ein Schutzglas (310) und ein Optiksystemgehäuse (300) zum Stützen des Schutzglases umfasst, wobei die Laserschweißvorrichtung im Betrieb einen Laserstrahl bereitstellt, der durch das Schutzglas hindurchgeht, wobei das Schutzmodul Folgendes umfasst:
eine erste Abdeckung (560), die eine Öffnung aufweist, um, bei Verwendung, dem Laserstrahl zu ermöglichen, durch dieselbe hindurchzugehen;
eine zweite Abdeckung (570), die, bei Verwendung, auf einer Seite eines Hauptgehäuses der Laserschweißvorrichtung in einem mit der ersten Abdeckung gekoppelten Zustand bereitgestellt wird, ist an das Optiksystemgehäuse koppelbar und befindet sich, wenn sie so gekoppelt ist, auf einer Seite eines Hauptgehäuses, und weist eine Öffnung auf, die, bei Verwendung, dem Laserstrahl ermöglicht, durch dieselbe hindurchzugehen; und
eine Vielzahl von Luftzufuhreinheiten (590), die auf einer Außenumfangsfläche der ersten Abdeckung oder der zweiten Abdeckung installiert sind und durch die Außenluft hineinströmt,
wobei die erste Abdeckung (560) oder die zweite Abdeckung (570) einen Luftströmungsweg umfasst, wobei der Luftströmungsweg ein Kanal ist, der von einer Plattenfläche auf einer Seite der ersten Abdeckung oder der zweiten Abdeckung vertieft ist, und eine Vielzahl von Luftlöchern (564), die durch dieselbe hindurchgehen, um dem Luftströmungsweg und der Außenumfangsfläche der ersten Abdeckung oder der zweiten Abdeckung zu ermöglichen, miteinander in Fluidverbindung zu stehen, und die Luftzufuhreinheiten in Fluidverbindung mit den Luftlöchern stehen,
wobei die Luftzufuhreinheiten dafür konfiguriert sind, dem Luftströmungsweg derart Luft zuzuführen, dass sie, bei Verwendung, in einen Raum A zwischen Passflächen der ersten Abdeckung und der zweiten Abdeckung und hin zu den Öffnungen abgeführt wird,
wobei die erste Abdeckung und die zweite Abdeckung eine Scheibenform aufweisen, und der Luftströmungsweg eine Ringform aufweist und in der Plattenfläche der ersten Abdeckung oder der zweiten Abdeckung bereitgestellt wird, und
**dadurch gekennzeichnet, dass**
das Schutzmodul ferner eine reflektiertes Licht absorbierende Platte (550) umfasst, die an eine Plattenfläche der ersten Abdeckung auf der von der zweiten Abdeckung entgegengesetzten Seite gekoppelt ist, ein Loch aufweist, das dem Laserstrahl ermöglicht, bei Verwendung, durch dasselbe hindurchzugehen, und eine schwarze Farbe aufweist, wobei die reflektiertes Licht absorbierende Platte eine Scheibenform aufweist und eine Vielzahl von stromlinienförmigen Plattenschlitzen (552) aufweist, die durch dieselbe hindurchgehen und entlang einer äußeren Kante voneinander beabstandet sind.

2. Schutzmodul nach Anspruch 1, wobei die reflektiertes Licht absorbierende Platte ein Metallmaterial umfasst, an dem ein magnetischer Körper durch eine magnetische Kraft angebracht ist.

3. Schutzmodul nach Anspruch 1 oder Anspruch 2, das ferner ein Abdichtungselement (580) umfasst, das eine Ringform aufweist und zwischen dem Optiksystemgehäuse und der zweiten Abdeckung einsetzbar ist, um eine Abdichtung zwischen dem Optiksystemgehäuse und der zweiten Abdeckung bereitzustellen.

4. Schutzmodul nach Anspruch 3, das ferner eine Abdichtungssektion (572) umfasst, in die das Abdichtungselement eingesetzt wird, von einer Plattenfläche auf einer Seite der zweiten Abdeckung vertieft ist.

5. Schutzmodul nach einem der vorhergehenden Ansprüche, das ferner Folgendes umfasst:
einen Fixierrahmen (510), der an eine Seite eines Hauptrahmens der Laserschweißvorrichtung koppelbar ist, angrenzend an das Optiksystemgehäuse angeordnet ist, und an beiden Enden gebogen ist, um eine ,U'-Form zu bilden;
Gleitrahmen (520), von denen jeder eine gerade Form aufweist und verschiebbar an ein jeweiliges der beiden gebogenen Enden des Fixierrahmens gekoppelt ist; und
Stützrahmen (530), von denen jeder an einen jeweiligen der Gleitrahmen gekoppelt und parallel zu der ersten Abdeckung angeordnet ist.

6. Schutzmodul nach Anspruch 5, das ferner Lampen (540) umfasst, von denen jede an einen jeweiligen der Stützrahmen koppelbar ist und dafür konfiguriert ist, Licht zu emittieren, das einer Wellenlänge des Laserstrahls entspricht.

7. Laserschweißanordnung, die eine Laserschweißvorrichtung und ein Schutzmodul nach einem der vorhergehenden Ansprüche umfasst.

## Revendications

1. Module de protection (500) pour coupler, en cours d'utilisation, à un dispositif de soudage par laser (10), le dispositif de soudage par laser comprenant un boîtier principal (100), une vitre de protection (310) et un boîtier de système optique (300) pour supporter la vitre de protection, dans lequel, en fonctionnement, le dispositif de soudage par laser fournit un faisceau laser qui passe à travers la vitre de protection, le module de protection comprenant :
un premier capot (560) comportant une ouverture pour permettre, en cours d'utilisation, à un faisceau laser de passer à travers celui-ci ;
un deuxième capot (570) qui, en cours d'utilisation, est fourni sur un côté d'un boîtier principal du dispositif de soudage par laser dans un état couplé avec le premier capot, peut être couplé au boîtier de système optique et, lorsqu'il est ainsi couplé, est situé sur un côté d'un boîtier principal, et comporte une ouverture qui permet, en cours d'utilisation, au faisceau laser de passer à travers celui-ci ; et
une pluralité d'unités d'alimentation d'air (590) qui sont installées sur une surface circonférentielle extérieure du premier capot ou du deuxième capot et à travers lesquelles de l'air extérieur s'écoule vers l'intérieur,
dans lequel le premier capot (560) ou le deuxième capot (570) comprend un chemin d'écoulement d'air, ledit chemin d'écoulement d'air étant un canal qui est renfoncé à partir d'une surface de plaque sur un côté du premier capot ou du deuxième capot, et une pluralité de trous d'aération (564) qui passent à travers celle-ci pour permettre au chemin d'écoulement d'air et à la surface circonférentielle extérieure du premier capot ou du deuxième capot d'être en communication fluidique l'un avec l'autre, et les unités d'alimentation d'air sont en communication fluidique avec les trous d'aération,
dans lequel les unités d'alimentation d'air sont configurées pour alimenter en air le chemin d'écoulement d'air de sorte qu'il est, en cours d'utilisation, rejeté dans un espace A entre des surfaces de contact du premier capot et du deuxième capot et vers les ouvertures,
dans lequel le premier capot et le deuxième capot ont une forme de disque, et le chemin d'écoulement d'air a une forme annulaire et est fourni dans la surface de plaque du premier capot ou du deuxième capot, et
**caractérisé en ce que**
le module de protection comprend en outre une plaque d'absorption de lumière réfléchie (550) qui est couplée à une surface de plaque du premier capot sur le côté opposé au deuxième capot, comporte un trou qui permet au faisceau laser en cours d'utilisation, de passer à travers celui-ci, et a une couleur noire, dans lequel la plaque d'absorption de lumière réfléchie a une forme de disque et comporte une pluralité de fentes de plaque en forme aérodynamique (552) qui passent à travers celle-ci et sont espacées l'une de l'autre le long d'un bord extérieur.

2. Module de protection selon la revendication 1, dans lequel la plaque d'absorption de lumière réfléchie comprend un matériau métallique auquel un corps magnétique est attaché par une force magnétique.

3. Module de protection selon la revendication 1 ou revendication 2, comprenant en outre un élément d'étanchéité (580) qui a une forme annulaire et peut être inséré entre le boîtier de système optique et le deuxième capot pour fournir une étanchéité entre le boîtier de système optique et le deuxième capot.

4. Module de protection selon la revendication 3, comprenant en outre une section d'étanchéité (572), dans laquelle l'élément d'étanchéité est inséré, est renfoncée à partir d'une surface de plaque sur un côté du deuxième capot.

5. Module de protection selon l'une quelconque des revendications précédentes, comprenant en outre :
un cadre de fixation (510), qui peut être couplé à un côté d'un cadre principal du dispositif de soudage par laser, est disposé de façon adjacente au boîtier de système optique, et est plié aux deux extrémités pour former une forme en 'U' ;
des cadres coulissants (520), dont chacun a une forme droite et est couplé de façon coulissante à une extrémité respective des deux extrémités pliées du cadre de fixation ; et
des cadres de support (530), dont chacun est couplé à un cadre respectif des cadres coulissants et disposé en parallèle au premier capot.

6. Module de protection selon la revendication 5, comprenant en outre des lampes (540), dont chacune peut être couplée à un cadre respectif des cadres de support et est configurée pour émettre de la lumière correspondant à une longueur d'onde du faisceau laser.

7. Agencement de soudage par laser comprenant un dispositif de soudage par laser et un module de protection selon l'une quelconque des revendications précédentes.
